Europäisches Patentamt

**European Patent Office**

Office européen des brevets

(11) Numéro de publication: **0 237 444 B1**

(12) **FASCICULE DE BREVET EUROPEEN**

(45) Date de publication de fascicule du brevet: **19.08.92** (51) Int. Cl.⁵: **H02J 3/14**

(21) Numéro de dépôt: **87420010.8**

(22) Date de dépôt: **12.01.87**

(54) **Relais de délestage notamment à effacement jours de pointe.**

(30) Priorité: **15.01.86 FR 8600594**
**10.03.86 FR 8603470**

(43) Date de publication de la demande:
**16.09.87 Bulletin 87/38**

(45) Mention de la délivrance du brevet:
**19.08.92 Bulletin 92/34**

(84) Etats contractants désignés:
**BE CH DE ES GB IT LI SE**

(56) Documents cités:
**EP-A- 0 045 286**
**EP-A- 0 047 089**
**FR-A- 2 433 254**
**FR-A- 2 436 521**
**FR-A- 2 464 588**

(73) Titulaire: **MERLIN GERIN**
**Rue Henri Tarze**
**F-38050 Grenoble Cédex(FR)**

(72) Inventeur: **Canonne, Paul**
**MERLIN GERIN Sce. Brevets**
**F-38050 Grenoble Cedex(FR)**
Inventeur: **Fiquet, Jacques**
**MERLIN GERIN Sce. Brevets**
**F-38050 Grenoble Cedex(FR)**
Inventeur: **Gondry, Philippe**
**MERLIN GERIN Sce. Brevets**
**F-38050 Grenoble Cedex(FR)**
Inventeur: **Legrand, Michel**
**MERLIN GERIN Sce. Brevets**
**F-38050 Grenoble Cedex(FR)**
Inventeur: **Pecave, Alain**
**MERLIN GERIN Sce. Brevets**
**F-38050 Grenoble Cedex(FR)**
Inventeur: **Volsy, Robert**
**MERLIN GERIN Sce. Brevets**
**F-38050 Grenoble Cedex(FR)**

(74) Mandataire: **Kern, Paul et al**
**Merlin Gerin Sce. Brevets 20, rue Henri Tarze**
**F-38050 Grenoble Cédex(FR)**

Rank Xerox (UK) Business Services

## Description

L'invention est relative à un relais de délestage pour une installation de distribution d'énergie électrique ayant un circuit prioritaire à alimentation permanente et des circuits non prioritaires, chacun doté d'un interrupteur pour interrompre temporairement l'alimentation, ledit relais comprenant un capteur du courant total absorbé par l'installation et un dispositif de traitement du signal émis par le capteur, ayant un premier dispositif d'affichage d'un premier seuil d'interruption, un deuxième dispositif d'affichage d'un deuxième seuil, d'une valeur inférieure audit premier seuil, un dispositif pour émettre un signal d'ouverture dudit interrupteur, lorsque le signal dépasse l'un des seuils affichés, et un circuit temporisateur maintenant ledit signal d'ouverture pendant une durée prédéterminée.

Un relais de délestage connu (FR-A-2.433.254) du genre mentionné, évite le déclenchement intempestif du disjoncteur de branchement lorsque la puissance absorbée dépasse le seuil, affiché inférieur à la puissance souscrite par le contrat d'abonnement. Les circuits non prioritaires, par exemple d'alimentation de convecteurs, sont déconnectés temporairement pour maintenir la puissance en-dessous du seuil d'interruption. Le relais de délestage comporte un circuit de temporisation au déclenchement et un circuit de temporisation au réenclenchement, ainsi qu'un dispositif de répartition de l'énergie électrique, disponible entre tous les convecteurs. La répartition de cette énergie est réalisée entre un certain nombre de convecteurs, de puissance cumulée correspondante, d'une manière cyclique avec une origine évolutive par permutation circulaire. Une horloge programmateur abaisse le seuil, notamment pendant la nuit, pour compenser la baisse de charge des circuits prioritaires et maintenir constante l'énergie distribuée aux convecteurs. La répartition uniforme entre tous les convecteurs est conservée.

Un tel relais de délestage ne convient pas aux installations modernes équipées d'un relais d'effacement jours de pointe, qui permet de bénéficier d'un tarif spécial pendant la plus grande partie de l'année, la consommation pendant certains jours de pointe étant par contre facturée à un tarif multiple. Un relais d'effacement jours de pointe connu (FR-A-2.464.588) est télécommandé par le distributeur pour déconnecter automatiquement les appareils gros consommateurs, tels que les appareils de chauffage électrique et les chauffe-eau. Il est clair qu'en période d'effacement jours de pointe, le relais de délestage dont l'installation est éventuellement équipée, devient inopérant et la présente invention a pour but de concilier le délestage en période normale et celui réalisé pendant les jours de pointe. Ce but est atteint par le mise en oeuvre des caractéristiques de la revendication 1.

Le relais d'effacement jours de pointe ne commande plus une déconnexion brutale des appareils non prioritaires, mais il abaisse le seuil de délestage de manière à limiter la consommation à une valeur prédéterminée pendant les périodes de tarification coûteuses. En période normale, le relais de délestage fonctionne pour éviter tout dépassement de la puissance souscrite par déconnexion des circuits non prioritaires de la manière usuelle dans un ordre donné. L'installation est subdivisée en plusieurs circuits non prioritaires dont le relais de délestage commande l'interruption de l'alimentation par étapes successives pour maintenir le maximum d'appareils alimentés. En période de jours de pointe le seuil est abaissé mais l'ordre prédéterminé de délestage est conservé. L'ordre de délestage de ces circuits peut être inversé à l'aide d'un sélecteur éventuellement télécommandé. Un bouton de marche forcée permet l'alimentation normale de l'installation pendant les jours de pointe. Le bouton de marche forcée peut commander une bascule bistable sélectionnant le seuil de délestage de puissance élevée, cette sélection étant signalée par un clignotement d'une diode luminescente. Le fonctionnement en marche forcée est automatiquement annulé en fin de période d'effacement, ce qui évite un fonctionnement en marche forcée lors d'une nouvelle période d'effacement à l'insu de l'abonné.

Le relais de délestage comporte un dispositif de signalisation permettant à l'utilisateur de connaître à chaque instant l'état de l'installation, notamment la période de préavis et la valeur du seuil de délestage utilisée. La signalisation est avantageusement réalisée par une diode luminescente bicolore, chaque couleur correspondant à l'un des seuils du relais. Un circuit oscillant permet une signalisation additionnelle par clignotement de la diode, notamment pour l'indication du préavis de délestage. La signalisation peut bien entendu être complétée ou remplacée par une signalisation sonore, laquelle peut être limitée à la période de préavis.

La puissance absorbée par l'installation est mesurée par un capteur de courant, qui délivre un signal redressé à un condensateur relié à une entrée d'un amplificateur opérationnel, dont l'autre entrée est polarisée à une tension fixe prédéterminée. Le condensateur assure une temporisation, l'amplificateur opérationnel basculant lorsque la tension de charge du condensateur atteint la tension fixe de polarisation. Le même condensateur détermine la temporisation au réenclenchement du circuit non prioritaire en prévoyant une contreréaction de charge du condensateur par le signal de déclenchement. Une diode luminescente est insérée en série dans le circuit d'alimentation du relais de déclenchement pour signaler l'excitation de ce relais et limiter la consommation d'énergie de ce circuit de déclenchement. Le document FR-A-2.436.521 décrit un appareil de délestage dans lequel un capteur de courant délivre un signal à un amplificateur opérationnel qui charge progressivement un condensateur. Lors du dépassement d'un seuil prédéterminé un relais est alimenté pour déconnecter le circuit non prioritaire. La temporisation au réenclenchement est fixée par un compteur.

D'autres avantages et caractéristiques ressortiront plus clairement de la description qui va suivre d'un mode de mise en oeuvre de l'invention, donné à titre d'exemple non limitatif et représenté aux dessins annexés, dans lesquels:

- la figure 1 représente le schéma électrique de la partie délestage du relais de délestage selon l'invention;
- la figure 2 représente le schéma électrique de la partie effacement jours de pointe du relais de délestage selon l'invention.

Sur les figures, un relais de délestage d'une installation monophasée, dont seule la phase 10 est resprésentée, alimente un circuit prioritaire 12 et trois circuits non prioritaires 14, 16, 18. Le relais de délestage est placé juste après le disjoncteur de branchement de l'installation (non représenté) et il est traversé par le courant total absorbé. Le courant absorbé parcourant le conducteur 10 est mesuré par un capteur 20, notamment un transformateur de courant, qui délivre un signal à un bloc de traitement, désigné par le repère général 22. Trois sorties 24, 26, 28 du bloc de traitement 22 sont reliées respectivement à des bobines 30, 32, 34 de commande d'interrupteurs 36, 38, 40 placés en amont des départs non prioritaires 14, 16, 18. Une alimentation des bobines 30, 32, 34 provoque respectivement l'ouverture des interrupteurs 36, 38, 40 et l'interruption de l'alimentation des circuits non prioritaires associés 14, 16, 18. Le bloc de traitement 22 est alimenté par un bloc d'alimentation 42 relié au conducteur 10 par un transformateur 44. Le bloc d'alimentation 42 comprend un pont redresseur 46 et un circuit stabilisateur de tension comprenant un transistor T5 piloté par une diode Zener Z1. La tension stabilisée VCC alimente l'électronique du relais de délestage et un pont diviseur 48 fournit une tension fixe de polarisation à trois amplificateurs opérationnels AO5, AO6, AO7 du bloc 22.

Le bloc de traitement 22 comporte un diviseur de tension, constitué par une résistance fixe R23, connectée en série de deux résistances ajustables par plots appelées ci-dessous potentiomètres PR et PN connectés électriquement en parallèle à un commutateur 50. Le commutateur 50 met sélectivement en circuit le potentiomètre PN et le potentiomètre PR dont les valeurs respectives sont réglables. La sortie du diviseur de tension est appliquée à trois circuits de délestage 52, 54, 56 respectivement associés aux sorties 24, 26, 28. Ces trois circuits de délestage 52, 54, 56 sont identiques à l'exception de la valeur d'une résistance fixant la valeur de temporisation et seul l'un 52 d'entre eux est décrit ci-après. Le circuit de délestage 52 comprend une diode D8 de redressement du signal délivré par le capteur 20, qui est appliqué à l'une des entrées de l'amplificateur opérationnel AO5 par l'intermédiaire d'un circuit de temporisation constitué par une capacité C9 et une résistance R24. L'autre entrée de l'amplificateur opérationnel AO5 est polarisée à la tension fixe délivrée par le bloc d'alimentation 42. La sortie de l'amplificateur opérationnel AO5 est reliée par l'intermédiaire d'une diode luminescente 58 à la bobine 30. Un circuit de réaction relié à la sortie de la diode électro-luminescente 58 comprend un condensateur C10 et une résistance R25 connectés en série et reliés à la première entrée de l'amplificateur opérationnel AO5. En parallèle au condensateur C9 est connectée une résistance de décharge R26. Le bloc de traitement 22 comporte d'autres éléments, notamment une diode Zener Z2 d'écrêtage du signal délivré par le capteur 20 ainsi qu'une diode D9 reliée au circuit de réaction pour supprimer les pointes de tension négatives.

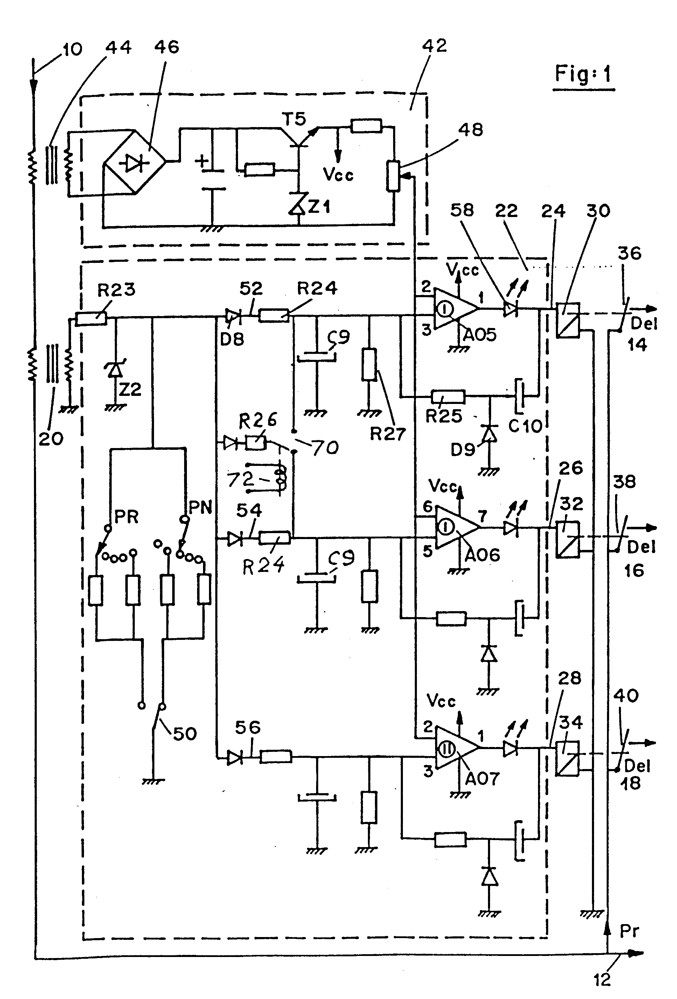

Le circuit de la figure 1 fonctionne de la manière suivante :

Le signal émis par le diviseur de tension R23, PR, PN, est proportionnel au courant parcourant le conducteur de phase 10 et mesuré par le capteur 20. Ce signal redressé par la diode D8 charge progressivement le condensateur C9 et dès que la tension de charge dépasse la tension fixe de polarisation V-l'amplificateur opérationnel AO5 bascule. Le signal délivré par l'amplificateur opérationnel AO5 alimente par l'intermédiaire de la diode électro-luminescente 58, qui s'allume, la bobine 30, qui ouvre l'interrupteur 36 et interrompt l'alimentation du circuit non prioritaire 14. Le condensateur C10 se charge lentement à travers les résistances R25 et R 27 et le courant de charge fait apparaître une différence de potentiel aux bornes de la résistance R 27 qui complète la charge du condensateur C9, à demi chargé par le signal du capteur 20. En fin de charge du condensateur C10 la différence de potentiel aux bornes de la résistance R27 disparait et si le signal délivré par le capteur 20 a diminué par l'interruption de l'alimentation du circuit non prioritaires 14, le potentiel de l'entrée positive de l'amplificateur AO5 s'abaisse et devient inférieur à l'entrée négative, ce qui provoque le reblocage de l'amplificateur AO5.

Le condensateur C10 se décharge rapidement par l'intermédiaire de la bobine 30 et la diode D9 et finalement l'interrupteur 36 se referme pour alimenter à nouveau le circuit non prioritaire 14. En cas de nouvelle surcharge on repart pour un nouveau cycle avec une temporisation sensiblement identique, le condensateur de temporisation ayant été entièrement déchargé.

Les circuits de délestage 54, 56 fonctionnent de la même manière, seule la valeur de la résistance de charge du condensateur étant différente pour obtenir des temporisations différentes, en l'occurrence un délestage échelonné évitant la coupure de l'ensemble des circuits non prioritaires lorsque le délestage de l'un ou de deux est suffisant pour ramener la puissance absorbée à une valeur inférieure au seuil sélectionné.

L'ordre d'interruption de l'alimentation des circuits non prioritaires 14, 16 peut être inversé en connectant une résistance shunt R26 en parallèle de la résistance de charge R24 de l'un 52 ou de l'autre 54 des circuits de délestage par l'intermédiaire d'un sélecteur 70. Dans la position des contacts du sélecteur 70, représentée à la figure 1, la résistance de charge du circuit de délestage 54 est constituée par les deux résistances R24 et R26 en parallèle, dont la résistance résultante est inférieure à la résistance R24 du circuit de délestage 52. Le circuit non prioritaire 16 est ainsi délesté en premier. En inversant le sélecteur 70 on connecte la résistance shunt R26 en parallèle de la résistance R24 du circuit de délestage 52 et le circuit non prioritaire 14 est délesté en premier. Le sélecteur 70 comporte une bobine de commande 72, qui peut être alimentée d'une manière quelconque, par exemple par une télécommande, non représentée. L'ordre de priorité peut être inversé alternativement pour maintenir notamment un chauffage minimal ou être piloté par un programmateur notamment horaire.

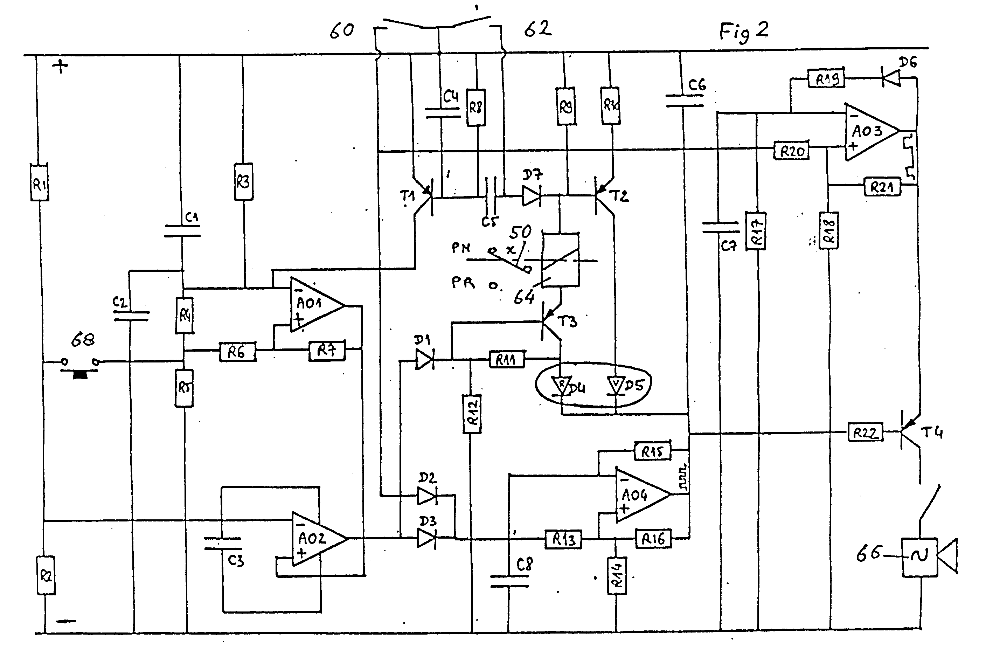

En fonctionnement normal, le commutateur 50 met en circuit le potentiomètre PN qui est réglé pour sélectionner un seuil correspondant au calibre du disjoncteur de branchement. Dans la position inverse du commutateur 50 on sélectionne un seuil de délestage différent déterminé par le potentiomètre PR. L'utilité de ce deuxième seuil de délestage ressortira de la description suivante en référence à la fig. 2.

Le bloc effacement jours de pointe du relais de délestage est alimenté par le bloc d'alimentation 42 et est piloté par un relais d'effacement jours de pointe, télécommandé par le distributeur, ce relais étant schématiquement représenté par un contact 60 de préavis et un contact 62 de commande de délestage. Sur la fig. 2 on reconnaît le commutateur 50 de sélection des potentiomètres PR, PN, ce commutateur 50 étant actionné par une bobine 64. Le circuit d'alimentation de la bobine 64 comprend, connectés en série, un transistor T3 et une diode luminescente D4, ce circuit étant shunté par un circuit connecté en parallèle comprenant en série un transistor T2 et une diode électroluminescente D5. Les diodes D4 et D5 peuvent être une diode bicolore, en l'occurrence une diode rouge D4 et une diode verte D5. A la sortie des diodes D4, D5 est connecté un amplificateur opérationnel AO4 agencé en oscillateur. L'entrée de l'oscillateur AO4 est reliée par l'intermédiaire d'une diode D2 au contact de préavis 60. En fonctionnement normal le transistor T2 est saturé et la bobine 64 est shuntée par le circuit parallèle, la diode D5 étant allumée et la diode D4 éteinte. Le commutateur 50 est en position normale correspondant à la puissance nominale PN. Lors d'une fermeture du contact préavis 60 l'amplificateur opérationnel AO4 fonctionne et applique à la sortie un signal pulsé faisant clignoter la diode verte D5. En position ouverte du contact préavis 60 la diode verte D5 est allumée signalant la position PN du commutateur 50. Le contact 62 d'effacement jours de pointe est relié par l'intermédiaire d'une diode D7 à la bobine 64 et à la base du transistor T2 de telle manière qu'une fermeture du contact 62 bloque le transistor T2 avec extinction de la diode verte D5 et sature le transistor T3 pour alimenter la bobine 64 et la diode rouge D4. Le commutateur 50 pivote vers la position PR signalée par l'allumage de la diode rouge D4.

La signalisation lumineuse par diodes électroluminescentes D4, D5, est complétée par une signalisation sonore, notamment de la période de préavis, caractérisée par la fermeture du contact de préavis 60. Le contact 60 est relié à l'entrée d'un amplificateur opérationnel AO3 monté en oscillateur dont la sortie alimente par l'intermédiaire d'un transistor T4 un haut-parleur 66. Le transistor T4 est piloté par l'oscillateur constitué par l'amplificateur opérationnel AO4, de telle manière qu'en position de fermeture du contact 60 le transistor T4 reçoive sur son émetteur le signal pulsé émis par l'oscillateur formé par l'amplificateur opérationnel AO3 et sur sa base le signal de l'oscillateur formé par l'amplificateur opérationnel AO4. Les fréquences d'oscillation de ces amplificateurs sont différentes et il est facile de voir que le transistor T4 réalise une fonction logique ET alimentant le haut-parleur 66 qui fonctionne en vibreur. La signalisation de la période de préavis par la diode verte D5 est ainsi complétée par le signal sonore émis par le vibreur 66. L'ouverture du contact de préavis 60 provoque l'arrêt du signal sonore et la fin du clignotement de la diode verte D5.

Le bloc effacement jours de pointe, illustré par la fig. 2 comporte de plus une commande de marche forcée actionnée par un bouton poussoir 68. La sortie du bouton poussoir est reliée à une bascule constituée par deux amplificateurs opérationnels AO1 et AO2 dont la sortie est reliée par l'intermédiaire d'une diode D1 à la base du transistor T3. Cette sortie de la bascule est de plus reliée par une diode D3 à l'oscillateur constitué par l'amplificateur AO4. Une impulsion sur le bouton poussoir 68 fait basculer la bascule bistable AO1, AO2 et bloque le transistor T3 interrompant l'alimentation de la bobine 64. Le commutateur 50 est ainsi amené dans la position PN. Le signal de sortie de la bascule bistable AO1, AO2 est appliqué par une résistance R11 à la diode rouge D4, qui clignote puisque l'oscillateur AO4 qui reçoît le signal de sortie de la bascule bistable fonctionne également. Ce fonctionnement implique bien entendu une fermeture du contact 62 d'effacement jours de pointe, un actionnement du bouton poussoir 68 en période normale étant sans aucun effet. En fin de période d'effacement jours de pointe, provoquant l'ouverture du contact 62 la bascule bistable AO1, AO2 est réinitialisée par l'envoi d'un signal sur l'entrée - de l'amplificateur opérationnel AO1 par l'intermédiaire d'un transistor T1. On évite ainsi un fonctionnement en marche forcée de la prochaine période d'effacement jours de pointe. Seuls les constituants essentiels des circuits ont été décrits, le lecteur pouvant se reporter aux figures pour disposer de plus amples détails sur les résistances et capacités de polarisation bien connues des spécialistes.

Le fonctionnement général du relais de délestage est rappelé sommairement :

En fonctionnement normal les contacts de préavis 60 et d'effacement jours de pointe 62 sont ouverts et le commutateur 50 est dans la position PN de sélection d'un seuil de délestage élevé. Lors d'un dépassement de ce seuil détecté par le capteur 20 le bloc de traitement 22 provoque l'ouverture de l'interrupteur 36 pour interrompre l'alimentation du circuit non prioritaire 14 et si ce délestage s'avère insuffisant, les interrupteurs 38, 40 sont également ouverts avec une certaine temporisation. Le bloc de traitement 22 commande le relestage après une période prédéterminée en refermant les interrupteurs 36, 38, 40. Cette période prédéterminée peut être de plusieurs minutes ou dizaines de minutes et en cas de persistance d'une surcharge un nouveau délestage est déclenché. La diode verte D5 est allumée et signale un fonctionnement avec un seuil de délestage élevé PN. Lors d'une commande du relais d'effacement jours de pointe par le distributeur le contact 60 de préavis se ferme et provoque le clignotement de la diode verte D5 et l'apparition du signal sonore 66. Le commutateur 50 reste dans la position PN, mais l'utilisateur est prévenu d'une prochaine commutation. En fin de période de préavis le contact de préavis 60 s'ouvre et le contact 62 d'effacement jours de pointe se ferme alimentant la bobine 64 qui fait pivoter le commutateur 50 vers la position PR. Le seuil de délestage est ainsi notablement réduit provoquant le cas échéant une ouverture des interrupteurs des circuits non prioritaires 14, 16, 18 selon la charge totale de l'installation. Ce changement du seuil de délestage est signalé par l'allumage de la diode rouge D4. L'utilisateur conserve néanmoins une possibilité de marche forcée pour le cas où une alimentation électrique est indispensable, même à un coût élevé, par actionnement du bouton poussoir 68. La fermeture du bouton poussoir 68 provoque l'alimentation de la bobine 64 et la remise en position PN du commutateur 50.

La marche forcée est signalée par clignotement de la diode rouge D4. L'ouverture du contact 62 efface la commande de marche forcée.

Le relais utilise un nombre limité de composants et l'utilisateur est averti des différents modes de fonctionnement par une simple diode bicolore. Ce relais permet le maintien de l'alimentation des différents circuits tout en limitant en période de jours de pointe la puissance absorbée à une faible valeur prédéterminée, compatible avec le coût de l'électricité en cette période.

**Revendications**

1. Relais de délestage pour une installation de distribution d'énergie électrique ayant un circuit prioritaire (12) à alimentation permanente et des circuits non prioritaires (14,16,18), chacun doté d'un interrupteur (36,38,40) pour interrompre temporairement l'alimentation, ledit relais comprenant un capteur (20) du courant total absorbé par l'installation et un dispositif (22) de traitement du signal émis par le capteur (20), ayant un premier dispositif d'affichage d'un premier seuil (PN) d'interruption, un deuxième dispositif d'affichage d'un deuxième seuil (PR) d'une valeur inférieure audit premier seuil (PN), un dispositif (A05,A06,A07) pour émettre un signal d'ouverture dudit interrupteur, lorsque le signal dépasse l'un des seuils affichés, et un circuit temporisateur (C9,C10,R26) maintenant ledit signal d'ouverture pendant une durée prédéterminée, caractérisé en ce qu'il comporte au moins deux circuits non prioritaires (14,16,18) à ordre d'interruption échelonné et prédéterminé,

- un commutateur (50) de sélection du premier seuil (PN) et du deuxième seuil (PR) appliqué audit dispositif d'émission du signal d'ouverture,
- un relais (60,62) d'effacement jours de pointe, télécommandé par le distributeur d'électricité et commandant ledit commutateur (50) pour sélectionner le premier seuil (PN) en période normale d'alimentation et le deuxième seuil (PR) pendant les périodes de commande dudit relais d'effacement jours de pointe, de façon a conserver l'ordre prédéterminé d'interruption des circuits non prioritaire (14,16,18) pendant ces dernières périodes,

- ledit relais (60,62) d'effacement jours de pointe comporte un premier contact de préavis (60) et un deuxième contact (62) de commande de délestage, l'ensemble étant agencé pour émettre un signal de préavis préalablement au signal de commande de délestage du commutateur (50),

- une commande manuelle, notamment un bouton de marche forcée (68), coopérant avec des moyens d'excitation de la bobine (64) de commutation du commutateur (50) pour sélectionner ledit premier seuil (PN) indépendamment de la position du deuxième contact (62) du relais d'effacement (62) en position de fermeture du bouton de marche forcée (68) et obtenir un fonctionnement en marche forcée.

2. Relais de délestage selon la revendication 1, caractérisé en ce que l'ouverture du deuxième contact (62) du relais en fin de période d'effacement annule la commande de marche forcée.

3. Relais de délestage selon la revendication 1 ou 2, caractérisé en ce que ledit relais d'effacement jours de pointe (60,62) comporte un indicateur visuel bicolore, notamment rouge (D4) et vert (D5), d'indication du seuil sélectionné (PN,PR) par le commutateur (50) et un premier oscillateur (A04) piloté par le signal de préavis du premier contact (60) et relié à l'indicateur pour faire clignoter la diode (D5) associée au seuil supérieur (PN) en présence du signal de préavis.

4. Relais de délestage selon la revendication 3, caractérisé en ce que l'indicateur visuel est une diode luminescente bicolore (D4,D5) ayant deux entrées, chacune correspondant à l'une des couleurs, que l'une des entrées est connectée en série dans le circuit d'alimentation de la bobine (64) du commutateur et l'autre entrée dans un circuit (T2,D5) de shuntage de ladite bobine et que la sortie de ladite diode (D4,D5) est reliée au premier oscillateur (A04) imposant un clignotement de la diode lorsqu'il est excité par le signal de préavis.

5. Relais de délestage selon la revendicatioon 4, caractérisé en ce qu'il comporte un deuxième oscillateur (A03) excité par le signal de préavis du premier contact (60) et un circuit ET (T4) dont la sortie est reliée à un indicateur sonore (66) et dont l'une des entrées est reliée au premier oscillateur 5AO4) et l'autre entrée au deuxième oscillateur (A03).

6. Relais de délestage selon la revendication 1, caractérisé en ce que les moyens d'excitation de la bobine (64) comportent une bascule bistable (A01,A02) dont la sortie pilote un transistor (T3) connecté en série avec la bobine (64) du commutateur (50).

7. Relais de délestage selon la revendication 6, caractérisé en ce que la sortie de la bascule bi-stable (A01,A02) commande le premier oscillateur (A04) et la diode (D4) associée au deuxième seuil (PR) pour faire clignoter cette dernière diode (D4) en position de marche forcée et que l'entrée de la bascule bi-stable (A01/A02) est reliée à un circuit (T1) de réinitialisation alimenté par l'ouverture du relais d'effacement (62).

8. Relais de délestage selon l'une quelconque des revendications précédentes, caractérisé en ce que le signal délivré par le capteur est appliqué à un amplificateur opérationnel (AO5) avec une temporisation déterminée par un premier condensateur (C9), que la sortie de l'amplificateur opérationnel (AO5) délivre un signal d'ouverture à un ciruct d'alimentation d'une bobine (30,32,34) de commande de l'interrupteur (36,38,40) du circuit non prioritaire et qu'un circuit de réaction (C10,R25) coopère avec ledit premier condensateur (C9) pour maintenir l'état d'interruption du circuit non prioritaire pendant une durée prédéterminée.

9. Relais de délestage selon la revendication 8, caractérisé en ce que le circuit de réaction (C10,R25) comporte un deuxième condensateur (C10) chargé progressivement par le signal d'interruption, le courant de charge engendrant une différence de potentiel complètant la charge du premier copndensateur (C9) pour maintenir le signal d'interruption pendant ladite durée prédéterminée.

10. Relais de délestage selon la revendication 8 ou 9, caractérisé en ce qu'il comporte un premier (36) et un deuxième (38) circuits non prioritaires, une première et une deuxième temporisations de durées différentes pour provoquer des délestages successifs de ces circuits et un sélecteur pour associer audit premier circuit (36) sélectivement ladite première ou deuxième temporisation et inversement audit deuxième circuit ladite deuxième ou première temporisation pour inverser l'ordre de délestage des circuits.

**Claims**

1. A load-shedding relay for an electrical power distribution installation having a priority circuit (12) with permanent power supply and non priority circuits (14,16,18), each equipped with a switch (36,38,40) to temporarily interrupt the power supply, said relay comprising a sensor (20) of the total current absorbed by the installation and a processing device (22) of the signal emitted by the sensor (20), having a first display device of a first interruption threshold (PN), a second display device of a second interruption threshold (PR) of a lower value than said first threshold (PN), a device (AO5,AO6,AO7) to emit an opening signal of said switch, when the signal exceeds one of the displayed thresholds, and a time delay circuit (C9,C10,R26) maintaining said opening signal for a preset time, characterized in that it comprises at least two non priority circuits (14,16,18) with staggered preset interruption orders,
 - a selector switch (50) to select the first threshold (PN) and second threshold (PR) applied to said opening signal emitting device,
 - a peak-day override relay (60,62), remote controled by the electricity distributor and controling said switch (50) to select the first threshold (PN) during a normal power supply period and the second threshold (PR) during control periods of said peak-day override relay, so as to preserve the preset interruption order of the non priority circuits (14,16,18) during the latter periods,
 - said peak-day override relay (60,62) comprises a first warning contact (60) and a second load-shedding command contact (62), the assembly being arranged to emit a warning signal prior to the load-shedding command signal of the selector switch (50),
 - a manual control, notably a forced ON operation button (68), cooperating with means for exciting the switching coil (64) of the selector switch (50) to select said first threshold (PN) regardless of the position of the second contact (62) of the override relay (62) in the closed position of the forced ON operation button (68) and obtain forced ON operation.

2. The load-shedding relay according to claim 1, characterized in that opening of said second contact (62) of the relay (62) at the end of the override period clears the forced ON operation command.

3. The load-shedding relay according to claim 1 or 2, characterized in that said peak-day override relay (60,62) comprises a two-colored visual indicator, notably red (D4) and green (D5), indicating the threshold (PN,PR) selected by the selector switch (50) and a first oscillator (AO4) controled by the warning signal of the first contact (60) and connected to the indicator to make the diode (D5) associated with the higher threshold (PN) flash in the presence of the warning signal.

4. The load-shedding relay according to claim 3, characterized in that the visual indicator is a two-colored light-emitting diode (D4,D5) having two inputs, each corresponding to one of the colors, that one of the inputs is serial connected in the power supply circuit of the coil (64) of the selector switch and the other input in a shunting circuit (T2,D5) of said coil and that the output of said diode (D4,D5) is connected to the first oscillator (AO4) imposing flashing of the diode when it is excited by the warning signal.

5. The load-shedding relay according to claim 4, characterized in that it comprises a second oscillator (AO3) excited by the warning signal of the first contact (60) and an AND circuit (T4) whose output is connected to a sound-emitting indicator (66) and one of whose inputs is connected to the first oscillator (AO4) and the other input to the second oscillator (AO3).

6. The load-shedding relay according to claim 1, characterized in that the means for exciting the coil (64) comprise a bistable flip-flop (AO1,AO2) whose output controls a transistor (T3) serial connected with the coil (64) of the selector switch (50).

7. The load-shedding relay according to claim 6, characterized in that the output of the bistable flip-flop (AO1,AO2) controls the first oscillator (AO4) and the diode (D4) associated with the second threshold (PR) to make this diode (D4) flash in the forced ON operation position and that the input of the bistable flip-flop (AO1,AO2) is connected to a reinitialization circuit (T1) supplied by opening of the override relay (62).

8. The load-shedding relay according to any one of the above claims, characterized in that the signal delivered by the sensor is applied to an operational amplifier (AO5) with a time delay determined by a first capacitor (C9), that the output of the operational amplifier (AO5) delivers an opening signal to a power supply circuit of a coil (30,32,34) controling the switch (36,38,40) of the non priority circuit and that a feedback circuit (C10,R25) cooperates with said first capacitor (C9) to maintain the interruption state of the non priority circuit for a preset time.

9. The load-shedding relay according to claim 8, characterized in that the feedback circuit (C10,R25) comprises a second capacitor (C10) progressively charged by the interruption signal, the charging current generating a potential difference completing the charge of the first capacitor (C9) to maintain the interruption signal for said preset time.

10. The load-shedding relay according to claim 8 or 9, characterized in that it comprises a first (36) and a second (38) non priority circuit, a first and a second time delay of different durations to bring about successive disconnections of these circuits, and a selector to associate with said first circuit (36) selectively said first or second time delay and inversely with said second circuit said second or first time delay to reverse the disconnection order of the circuits.

**Patentansprüche**

1. Lastabwurfrelais für elektrische Verteileranlagen mit einem dauergespeisten primären Stromkreis (12) und mehreren, mit je einem Ausschaltkontakt zur vorübergehenden Trennung der Last ausgerüsteten sekundären Stromkreisen (14, 16, 18), bestehend aus einem Stromwandler (20) zur Erfassung der Gesamtstromaufnahme der Installation und einer Steuerschaltung (22) zur Weiterverarbeitung des Stromwandlersignals, die einen ersten Einstellregler zur Wahl eines ersten Abwurf-Schwellwertes (PN) und einen zweiten Einstellregler zur Wahl eines im Vergleich zum genannten ersten Schwellwert niedrigeren zweiten Abwurf-Schwellwerts (PR), eine Steuerlogik (A05, A06, A07) zur Weiterleitung des Abwurfbefehls an den genannten Ausschaltkontakt bei Überschreiten eines der eingestellten Schwellwerte sowie ein Zeitglied (C9, C10, R26) zum Halten des Abwurfbefehls über eine festgelegte Zeit umfaßt, dadurch gekennzeichnet, daß das Relais mindestens zwei sekundäre Stromkreise (14, 16, 18) mit abgestuften und zuvor festgelegten Abwurffolgen steuert und die Schaltung folgende Komponenten einschließt:
   - einen Umschaltkontakt (50) zur Wahl des ersten Schwellwertes (PN) und des zweiten Schwellwerts (PR), mit denen die genannte Steuerlogik für den Abwurfbefehl beaufschlagt wird,
   - ein vom EVU ferngesteuertes und auf den Umschaltkontakt (50) wirkendes Spitzenverbrauch-Abschaltrelais (60, 62), wobei in normalen Verbrauchszeiten der erste Schwellwert PN und in Zeiten mit aktiviertem Spitzenverbrauch-Abschaltrelais der zweite Schwellwert eingestellt wird, damit auch während dieser Spitzenverbrauchszeiten die Abwurfreihenfolge der sekundären Stromkreise (14, 16, 18) eingehalten wird,
   - einen zum genannten Spitzenverbrauch-Abschaltrelais (60, 62) gehörenden ersten Meldekontakt (60) und einen zweiten Lastabwurfkontakt (62), wobei die Kontakte so geschaltet sind, daß dem über den Umschaltkontakt (50) ausgesandten Lastabwurfsignal ein Meldesignal vorausgeht,
   - ein manuelles Betätigungsorgan, insbesondere einen mit der Erregerschaltung der Spule (64) des Umschaltkontakts (50) zusammenwirkenden Drucktaster für Zwangsbetrieb (68), das in Einschaltstellung eine Unsschaltung auf den genannten ersten Schwellwert (PN) unabhängig von der Stellung des zweiten Kontakts (62) des Spitzenverbrauch-Abschaltrelais (62) und somit einen Zwangsbetrieb erlaubt.

2. Lastabwurfrelais nach Anspruch 1, dadurch gekennzeichnet, daß das Öffnen des zweiten Relaiskontakts (62) nach Ablauf des Spitzenlastzeitraums den Zwangsbetrieb wieder aufhebt.

3. Lastabwurfrelais nach Anspruch 1 oder 2, dadurch gekennzeichnet, daß das genannte Spitzenlast-Abschaltrelais (60, 62) mit einen zweifarbigen Leuchtmelder, insbesondere mit den Farben rot (D4) und grün (D5), zur Anzeige der über den Umschaltkontakt (50) gewählten Schwellwerte (PN, PR) ausgerüstet ist, und daß eine erste mit dem Meldesignal des ersten Kontakts (60) beaufschlagte Steuerlogik (A04) mit dem Leuchtmelder verbunden ist, um bei Anliegen des Meldesignals ein Blinken der dem oberen Schwellwert (PR) zugeordneten Leuchtdiode (D5) zu bewirken.

4. Lastabwurfrelais nach Anspruch 3, dadurch gekennzeichnet, daß der Leuchtmelder aus zwei Leuchtdioden (D4, D5) unterschiedlicher Farbe besteht und über zwei farbabhängige Eingänge verfügt, wobei der erste Eingang mit dem Versorgungsstromkreis der Spule (64) des Umschaltkontakts in Serie geschaltet ist, der andere Eingang in einem parallel zur Spule geschalteten Zweig (T2, D5) liegt und der Ausgang der Diodenschaltung (D4, D5) mit der ersten Steuerlogik (A04) verbunden ist, die bei Anliegen eines Meldesignals ein Blinken der entsprechenden Diode bewirkt.

5. Lastabwurfrelais nach Anspruch 4, dadurch gekennzeichnet, daß der Steuerkreis eine durch das Meldesignal des ersten Kontakts (60) beaufschlagte zweite Steuerlogik (A03) sowie ein UND-Glied (T4) umfaßt, dessen Ausgang mit einer akustischen Warnanzeige (66) und dessen Eingänge mit der ersten bzw. zweiten Steuerlogik (A04, A03) verbunden sind.

6. Lastabwurfrelais nach Anspruch 1, dadurch gekennzeichnet, daß die Erregerschaltung der Spule (64) eine bistabile Kippstufe (A01, A02) umfaßt, deren Ausgang einen mit der Spule (64) des Umschaltkontakts (50) in Serie geschalteten Transistor (T3) ansteuert.

7. Lastabwurfrelais nach Anspruch 6, dadurch gekennzeichnet, daß der Ausgang der bistabilen Kippstufe (A01, A02) die erste Steuerlogik (A04) und die dem zweiten Schwellwert (PR) zugeordnete Diode (D4) ansteuert, um diese bei Zwangsbetrieb zum Blinken zu bringen, und daß der Eingang der bistabilen Kippstufe (A01, A02) mit einer durch den Abfall des Spitzenverbrauch-Abschaltrelais (62) aktivierte Rückstellschaltung (T1) verbunden ist.

8. Lastabwurfrelais nach einem der vorhergehenden Ansprüche, dadurch gekennzeichnet, daß das vom Stromwandler ausgesandte Signal einem Operationsverstärker (A05) mit einer durch einen ersten Kondensator (C9) fest eingestellten Zeitverzögerung zugeführt wird, daß der Ausgang des Operationsverstärkers (A05) ein Abwurfsignal an den Versorgungsstromkreis einer den Ausschaltkontakt (36, 38, 40) des entsprechenden sekundären Stromkreises ansteuernden Spule (30, 32, 34) liefert und daß ein RC-Glied (C10, R25) mit dem genannten Kondensator (C9) zusammenwirkt, um den Ausschaltzustand des sekundären Stromkreises über eine festgelegte Zeit aufrechtzuerhalten.

9. Lastabwurfrelais nach Anspruch 8, dadurch gekennzeichnet, daß das RC-Glied (C10, R25) einen zweiten, durch das Abwurfsignal nach und nach aufgeladenen Kondensator (C10) umfaßt, wobei der Ladestrom ein Spannung zur Folge hat, die sich zur Ladung des ersten Kondensators (C9) zum Halten des Abwurfsignals über den genannten Zeitraum addiert.

10. Lastabwufrelais nach Anspruch 8 oder 9, dadurch gekennzeichnet, daß die Verteilung einen ersten (36) und einen zweiten (38) sekundären Stromkreis, eine erste und eine zweite, unterschiedliche Zeitverzögerung zum abgestuften Lastabwurf der genannten Stromkreise sowie einen Einstellregler umfaßt, über den dem ersten Stromkreis (36) wahlweise die erste oder die zweite Zeitverzögerung bzw. dem zweiten Stromkreis wahlweise die zweite oder die erste Zeitverzögerung zugeordnet werden können, um die Abwurfreihenfolge der Stromkreise umzukehren.

Fig·1

Fig 2